# EUROPEAN PATENT APPLICATION

(11) **EP 4 516 703 A1**
(43) Date of publication of application: **05.03.2025**
(21) Application number: 23868690.1
(22) Date of filing: 14.09.2023
(51) Int. Cl.: B65G 43/08, B65G 47/04, B65G 47/24, B41M 5/24, B23K 26/02

(54) **LASER MARKING APPARATUS (EMBODIMENTS) AND MARKER UNIT**

(30) Priority: 22.09.2022 RU 2022124935; 19.05.2023 RU 2023112969
(71) Applicant: Obshchestvo S Ogranichennoj Otvetstvennostyu "Kallisto Services", Moscow, 119071 (RU)
(72) Inventor: BULGAKOV, Pavel Geogievich, Vidnoe, 142701 (RU); KURMANOV, Evgenij Aleksandrovich, Mytishci, 141009 (RU); VAVILIN, Igor Valerevich, Kurgan, 640000 (RU); SMERTIN, Andrey Urevich, Moscow, 119618 (RU); SNACHEV, Vadim Nikolaevich, Moscow, 105037 (RU)
(74) Representative: Zellentin & Partner mbB Patentanwälte
(86) International application number: PCT/RU2023/000272
(87) International publication number: WO 2024/063666

(57) **Abstract**

The invention relates to means for marking the end closures of beverage and food containers using a laser beam, inter alia with a two-dimensional identification or authentication barcode applied to predetermined parts of each end closure, and can be used primarily in the food industry. The aim of improving the quality of a laser marking by providing for optimal action of a laser beam on differently oriented regions to be marked is achieved in that, in an apparatus for laser marking the end closures of beverage and food containers which comprises, arranged in sequence, a unit for loading a stack of closures into the apparatus, a unit for separating a stack of closures into individual closures and feeding same to a means for conveying the individual closures for marking and subsequent discharge, a laser marker unit, a rejection unit, and a unit for collecting closures in a stack or loose during discharge from the apparatus, the laser marker unit is equipped with a module for determining the orientation of a closure, said module being in the form of a computer vision camera, and the rejection unit contains a video camera with an image analyzer capable of sending a signal to reject a closure by pushing the rejected closure off a conveyor.

## Description

The present invention relates to means for laser beam marking of beverage/food container end closures, such as in the form of a two-dimensional identification or verification barcode, applied onto pre-determined portions of each end closure, and may be used primarily in the food industry.

One prior art machine for laser marking of a variety of objects comprises, arranged in sequence, a unit for feeding the objects to be marked into the machine, a unit for delivering thereof onto a means for conveying each individual object for marking and subsequent discharge, a laser marker unit, and a unit for discharging the marked objects from the machine (RF Patent 2674194, IPC B41J 2/44, pubd 2018).

The above prior art machine does not enable non-oriented objects to be laser-marked with high quality due to inability to either position the objects such as to achieve high-quality laser marking, or to form and point a laser beam onto the surface to be marked in desired direction with respect to the surface to be marked.

The prior art device, closest to the present invention in its technical essence, is an apparatus for beverage/food container end closure laser marking, comprising, arranged in sequence, a unit for loading a stack of closures into the apparatus, a unit for separating a stack of closures into individual closures and delivering them to a means for conveying individual closures for marking and subsequent discharge, a laser marker unit equipped with means for end closure orienting by re-positioning the same, a rejection unit configured to check the marking quality and to isolate the closures that do not meet predetermined quality criteria, a unit for collecting closures in a stack and discharge from the apparatus (RF Patent No. 2707302, IPC B65D 17/00, pubd 2019).

Problems with the above prior art apparatus include the need to use a complex device for end closure orienting and inadequate operational efficiency of certain units forming part of the apparatus.

One prior art laser marker unit of an apparatus for non-oriented object laser marking comprises a means for arranging and conveying the objects to be marked, a module for detecting the object to be marked, a pulsed laser source, an optical means for laser beam forming and pointing to a surface to be marked, a control unit in communication with the pulsed laser source the detection unit, and the optical means for laser beam forming and pointing to the surface to be marked, a module for determining orientation of the object to be marked configured in the form of a video camera in communication with the control unit, the control unit being configured to act in response to a signal generated by the video camera, to generate a control signal for the optical means for laser beam forming and pointing to the surface to be marked, enabling a laser beam to be pointed in desired direction with respect to the surface to be marked (RF Patent No. 2322334, IPC B23K 26/04, pubd 2007).

However, the above prior art device is unable to provide either laser marking, if the object to be marked is continuously moving, or capturing the movement velocity of the object to be marked during the apparatus operation.

The prior art closest in its technical essence to the laser marker unit of the present invention is a laser marker unit of an apparatus for beverage/food container end closure laser marking, the apparatus comprising a laser marker control unit and a pulsed laser source, an optical means for laser beam forming and pointing to the surface to be marked, a detection module, and a module for determining the movement velocity of an object to be marked in communication with the laser marker control unit (RF Patent No. 127669, IPC B23K 26/02, pubd 2013).

Problems with the above prior art device include inadequate laser marking quality due to inability, in case of varying orientations of moving objects (no orientation detection module is provided), to point a laser beam with respect to a surface or region to be marked such that the laser beam acts optimally onto the surface or region to be marked. Furthermore, the need to use three lasers in the prior art device to produce one marking imprint makes the overall structure of the device more complex.

The present invention, regarding the configurations of both the apparatus for beverage/food container end closure laser marking and its laser marker unit, is aimed at solving a technical problem and accomplishing a technical result consisting in improving the laser marking quality by providing an optimal laser beam action onto marking regions having different orientations, and, regarding the apparatus configuration, to improve the overall efficiency of the apparatus operation through more efficient configurations of the individual units constituting the apparatus.

Said technical result, regarding configuration of the apparatus of Independent Claim 1, is accomplished by that, in an apparatus for beverage/food container end closure laser marking, comprising, arranged in sequence, a unit for loading a stack of closures into the apparatus, a unit for separating a stack of closures into individual closures and feeding them to a means for conveying individual closures for marking and subsequent discharge, a laser marker unit, a rejection unit, a unit for collecting closures in a stack or loose during discharge from the apparatus, the laser marker unit is equipped with a closure orientation determining module, the module being in the form of a computer vision camera, and the rejection unit comprises a video camera having an image analyzer configured to send a signal to reject a closure by pushing the rejected closure off a conveyor.

By providing the laser marker unit with the closure orientation determining module configured in the form of a computer vision camera, laser marking quality may be improved as a result of an optimal laser beam action in desired direction on the surfaces to be marked of closures having different orientations. It is made possible by using the above technical means that enable the closure orientation to be accurately determined and the laser beam direction to be varied so as to be optimal for efficient closure marking, depending on variations in individual closures' orientations. By using the computer vision camera, high quality of visual inspection, high operation velocity with increased turnover, as well as the possibility of continuous operation and accuracy of repeated measurements, may be achieved, the use of such camera as part of non-oriented moving closure laser marking hardware being unknown from the prior art.

By providing the rejection unit with a video camera having an image analyzer configured to send a signal to reject a closure by pushing the rejected closure off a conveyor, the overall apparatus operation efficiency may be improved as a result of preventing defective closure delivery to the apparatus outlet through the use of a high-accuracy rejected closure identification means.

In a preferred implementation, the unit for loading a stack of closures into the apparatus in the form of a covered/open chute that may be provided with a vibratory motor, enables reliably loading a stack of closures (and pre-separation of the closures from each other within the stack by vibration or gravity movement) and transferring the stack to the unit for separating a stack of closures into individual closures, thus improving the efficiency of this unit and, thereby, the overall apparatus operation.

In a preferred implementation, the unit for separating a stack of closures into individual closures in the form of an auger separator enables, with an efficiency inherent to such separator, separating a stack of closures into individual closures, thereby accomplishing the technical result.

By implementing the unit for collecting closures in a stack and discharging from the apparatus preferably in the form of a covered/open chute having connected thereto a vacuum suction gripping system, efficiency of this unit and, thereby, the overall apparatus operation may be improved as a result of that such collection enables the closures to be uniformly arranged within the stacks and, thereby, uniform stacks to be produced.

A preferred implementation of the laser marker unit, wherein it comprises a laser marker control unit in communication with a pulsed laser source and an optical means for laser beam forming and pointing to the surface to be marked, a detection module and a module for determining the movement velocity of an object to be marked, is an optimal hardware embodiment of the laser marker unit that improves the laser marking quality by providing an optimal laser beam action onto marking regions having different orientations. Furthermore, the apparatus may use multiple pulsed laser sources and optical means for laser beam formation operating in series (successively) to increase the apparatus throughput.

Said technical result, regarding configuration of the apparatus of Independent Claim 7, is accomplished by that, in an apparatus for beverage/food container end closure laser marking, comprising, arranged in sequence, a unit for loading a stack of closures into the apparatus, a unit for separating a stack of closures into individual closures and feeding them to a means for conveying individual closures for marking and subsequent discharge, a laser marker unit, a rejection unit, a unit for collecting closures in a stack or loose during discharge from the apparatus, the laser marker unit is provided with a laser marker control unit in communication with a pulsed laser source, an optical means for laser beam forming and pointing to the closure surface to be marked, a detection module and a closure movement velocity determining module, the laser marker unit further comprising a closure orientation determining module, configured in the form of a computer vision camera in communication with the orientation determining module control unit which is further connected to an additional detection module, and illumination sources directed to the object's closure, wherein the laser marker control unit is configured to, in response to a signal generated by the orientation determining module control unit, generate a control signal for the optical means for laser beam forming and pointing to the closure surface to be marked, enabling the laser beam to be pointed in desired direction with respect to the closure surface to be marked.

An implementation wherein the laser marker unit is provided with a laser marker control unit having connected thereto a pulsed laser source, an optical means for laser beam forming and pointing to the closure surface to be marked, a detection module and a closure movement velocity determining module, the laser marker unit further comprising a closure orientation determining module, configured in the form of a computer vision camera in communication with the orientation determining module control unit which is further connected to an additional detection module, and illumination sources directed to the closure, wherein the laser marker control unit is configured to, in response to a signal generated by the orientation determining module control unit, generate a control signal for the optical means for laser beam forming and pointing to the closure surface to be marked, enabling the laser beam to be pointed in desired direction with respect to the closure surface to be marked, is a detailed description of the best hardware implementation of the laser marker unit that improves the laser marking quality by providing an optimal laser beam action onto marking regions having different orientations. Furthermore, the apparatus may use multiple pulsed laser sources and optical means for laser beam formation operating in series (successively) to increase the apparatus throughput.

Furthermore, by providing the laser marker unit with an additional detection unit in communication with the closure orientation determining module control unit, said technical result may be accomplished by enabling timely activation and operation of the closure orientation determining module, thus enabling the closure orientation to be accurately determined and used in generating a laser beam and pointing the laser beam in an optimal manner onto the closure surface to be marked, thereby providing an efficient laser marking.

Regarding the laser marker unit configuration, said technical result is accomplished by that the laser marker unit, comprising a laser marker control unit having connected thereto a pulsed laser source, an optical means for laser beam forming and pointing to the closure surface to be marked, a detection module and a closure movement velocity determining module, further comprises a closure orientation determining module, configured in the form of a computer vision camera in communication with the orientation determining module control unit which is further connected to an additional detection module, and illumination sources directed to the closure, wherein the laser marker control unit is configured to, in response to a signal generated by the orientation determining module control unit, generate a control signal for the optical means for laser beam forming and pointing to the closure surface to be marked, enabling the laser beam to be pointed in desired direction with respect to the closure surface to be marked. Furthermore, the laser marker unit may use multiple pulsed laser sources and optical means for laser beam formation operating in series (successively) to increase the apparatus throughput.

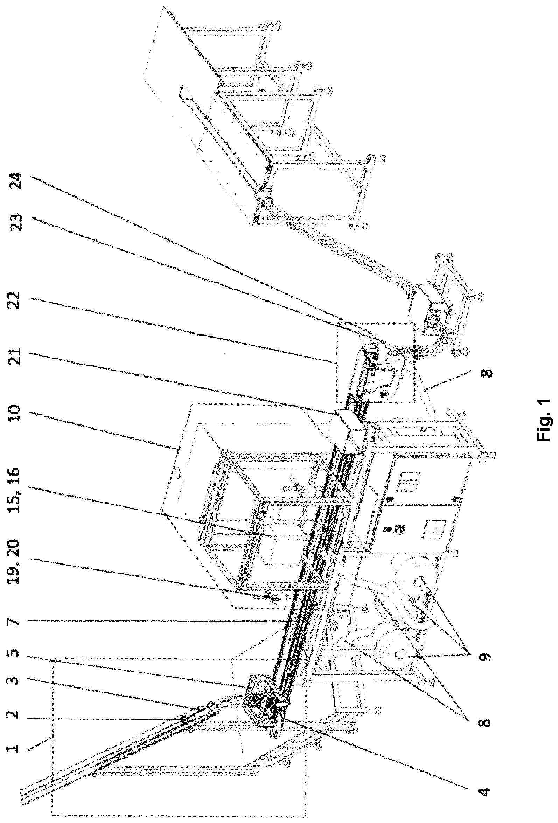

Fig.1 schematically shows a general view of an apparatus for beverage/food container end closure laser marking;
Fig. 2 shows a partial view of the apparatus in the auger separator area;
Fig. 3 is a block diagram of a laser marker unit;
Fig. 4 is a block diagram of a closure orientation determining module.

The apparatus for beverage/food container end closure laser marking comprises a unit 1 for loading a stack of closures 2 into the apparatus, the unit being configured in the form of a covered or open chute 3 that may be provided with a vibratory motor 4. A stack of closures is fed, in a horizontal or inclined position, into the chute 3 by an operator and is moved in the chute 2, vibrating under the action of the vibratory motor 4, or by gravity to a unit 5 for separating a stack of closures into individual closures.

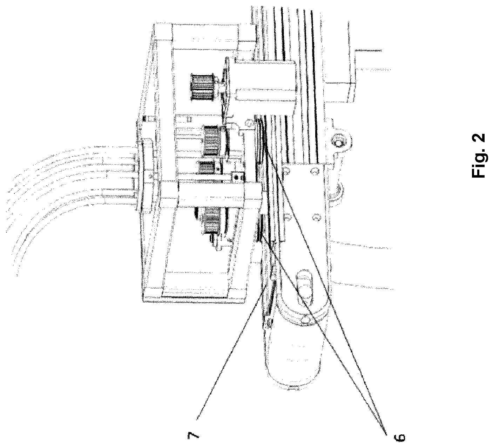

The unit 5 for separating a stack of closures into individual closures is configured in the form of an auger separator, that is an auger 6 is used as the separator, the auger engaging with an edge portion of the leading closure 2 in the stack and separating, from the stack, the closure 2 which is then received on a belt conveyor (ref. to Fig. 2).

The means for conveying individual closures for marking and subsequent discharge may be configured, for example, as a perforated belt conveyor 7 (configured in the form of a single continuous conveyor or a system of interconnected conveyors) equipped with a closure 2 vacuum suction gripping system to prevent closure rocking and spontaneous displacements. The closure vacuum suction gripping system may comprise one or more vacuum chambers 8, wherein vacuum is maintained by air extraction by means of a fan or a pump 9.

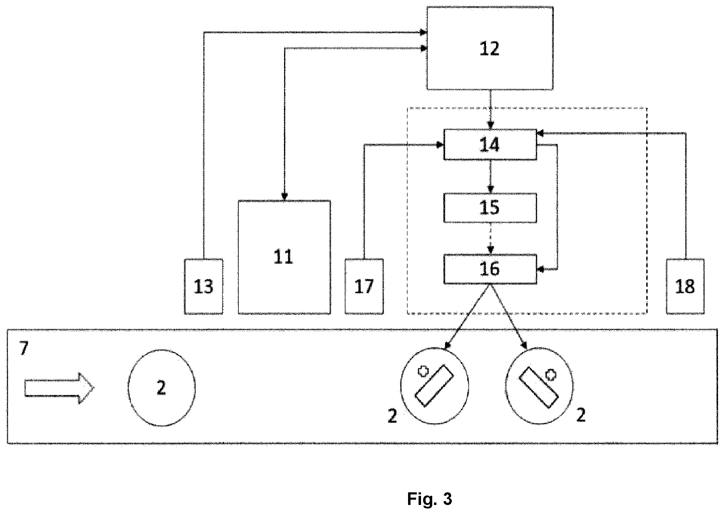

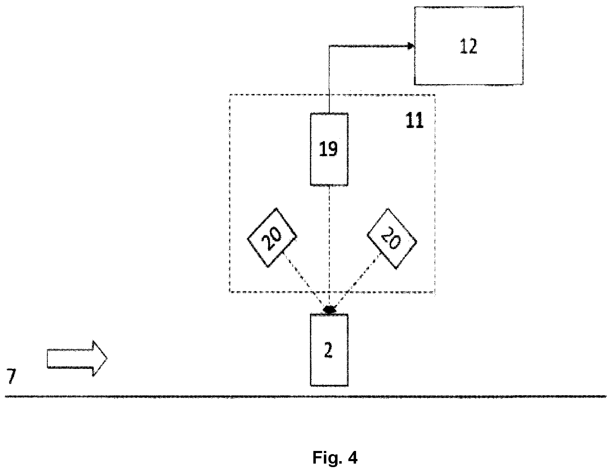

The laser marker unit 10 (ref. to Fig. 3) comprises a closure orientation determining module 11 in communication with the orientation determining module control unit 12 having connected thereto an additional closure detection module 13 for closure 2 detection. The laser marker unit 10 further includes a laser marker control unit 14 (a computer with suitable software) having connected thereto a pulsed laser source 15, for example, a pulsed ytterbium (fiber) laser emitter, and an optical means 16 for laser beam forming and pointing to the closure surface to be marked, for example, a double-axis scanner. Furthermore, the apparatus may use multiple pulsed laser sources and optical means for laser beam formation operating in series (successively) to increase the apparatus throughput. The laser marker control unit 14 has connected thereto a detection module 17 and a closure movement velocity determining module 18, and the orientation determining module control unit 12. The closure orientation determining module 11 is configured (ref. to Fig. 4) in the form of a computer vision camera 19 in communication with the orientation determining module control unit 12 and illumination sources 20 directed to the closure 2.

The apparatus further comprises a rejection unit 21 configured to check the marking quality and to isolate the closures that do not meet predetermined quality criteria, which may be of any known structure, for example, may comprise a video camera having an image analyzer, the latter sending a signal to reject a particular closure 2 to a device for pushing the closure off the conveyor 7 (not shown).

The unit 22 for collecting closures in a stack and discharging from the apparatus is configured in the form a chute 23 having connected thereto a vacuum suction gripping system 24 in the form of vacuum suction grips used to arrange individual closures 2 in stacks, the stacks then being unloaded by the operator from the apparatus and packaged for transportation.

The apparatus for beverage/food container end closure laser marking of the present invention operates as follows.

Beverage/food container end closures 2 are normally received for marking in the form of a stack of such closures, the stack being fed by an operator into the unit 1 for loading a stack of closures into the apparatus in an inclined position onto the chute 3. The stack of closures 2 is moved via the chute 3, vibrating under the action of the vibratory motor 4, or by gravity, to the unit 5 for separating a stack of closures into individual closures 2, the closures 2 being, during such movement, separated from each other.

The stack of closures is then delivered to the unit 5 for separating a stack of closures into individual closures, configured in the form of an auger separator, wherein the auger 6 is used as the separator, the auger engaging with an edge portion of the leading closure 2 in the stack and separating, from the stack, the closure 2 which is then delivered onto the belt conveyor 7.

The individual closures 2 received on the belt conveyor 7 are conveyed and delivered for marking to the laser marker unit 10. By using a vacuum suction gripping system for closure 2 vacuum gripping, the closures 2 are prevented from rocking and spontaneous undesired displacements on the belt conveyor 7.

At first, the additional closure detection module 13 captures the closure 2 presence and sends a relevant signal to the orientation determining module control unit 12, the latter then sending a control signal to activate the closure orientation determining module 11, which then determines such orientation based on a parameter or a characteristic of the closure 2, for example, based on an angle α of the surface to be marked deviation from the axis perpendicular to the movement axis. The orientation is determined by means of the computer vision camera 19 capturing a video image of the closure 2 illuminated by illumination sources 20 (ref. to Fig. 3) and sending relevant information, for example, in the form of digital data, to the orientation determining module control unit 12. The information is received in the laser marker control unit 14 which, based on the object to be marked orientation information processing outcomes, generates a relevant control signal to the optical means 16 for laser beam forming and pointing to the surface to be marked. Based on the above signal, the optical means 16 is set to provide, for example, the pulsed laser source 15 beam focusing and deflection, for example, based on the above deviation angle α, in desired direction with respect to the closure 2 surface to be marked. After the closure detection module 17 captures the closure 2 presence in the area of expected exposure to laser irradiation, the laser maker control unit 14 generates, taking into account the closure 2 movement velocity based on data from the closure movement velocity determining module 18, relevant control signals to the pulsed laser source 15. A laser beam from the pulsed laser source 15, by passing through the optical means 16 for laser beam forming and pointing to the closure 2 surface to be marked, is pointed in an optimal direction for efficient laser marking and performs the marking, for example, in the form of a two-dimensional information or verification bar code. Where multiple pulsed laser sources 15 and optical laser beam forming means 16, connected respectively to each of the sources, are used, each particular laser beam from a particular source 15 is positioned based on individual signals from the laser marker control unit 14 in accordance with the orientation of the respective closure to be marked by the particular laser source 15, for example, by establishing a mathematical queue.

Referring now to Fig. 2, a dotted line, directed from the pulsed laser source 15 to the optical means 16 for laser beam forming and pointing to the surface to be marked and further to the closure 2, schematically shows possible laser beam directions for different closure 2 orientations.

The laser-marked closures 2 are received in the rejection unit 21, wherein their marking quality is checked and any closures 2 that do not meet predetermined quality criteria are isolated. The checking may be performed, for example, by means of a video camera having an image analyzer, the latter sending a signal to reject a particular closure 2, which is received by a device for pushing that closure off the conveyor 7, the device pushing any non-conforming closures, for example, into a collector (not shown).

The entire marking process ends with individual closures 2 being received in the unit 22 for collecting closures in a stack on the chute 23 with the use of vacuum suction grips 24, by which the individual closures 2 are gripped and sequentially arranged in stacks, the latter then being unloaded by the operator from the apparatus and packaged for transportation. In case where loose closures are discharged from the apparatus, the apparatus comprises a chute for marked closure discharge from the marker conveyor into shipping boxes or other type of packaging (not shown).

The apparatus for beverage/food container end closure laser marking and its laser marker unit of the present invention enable achieving a high quality of laser marking by providing an optimal laser beam action onto marking regions of end closures having different orientations.

## Claims

1. An apparatus for beverage/food container end closure laser marking, comprising, arranged in sequence, a unit for loading a stack of closures into the apparatus, a unit for separating a stack of closures into individual closures and feeding them to a means for conveying individual closures for marking and subsequent discharge, a laser marker unit, a rejection unit, a unit for collecting closures in a stack or loose during discharge from the apparatus, **characterized in that** laser marker unit is equipped with a closure orientation determining module, configured in the form of a computer vision camera, the rejection unit comprising a video camera having an image analyzer configured to send a signal to reject a closure by pushing the rejected closure off a conveyor.

2. The apparatus for beverage/food container end closure laser marking of Claim 1, **characterized in that** the unit for loading a stack of closures into the apparatus is configured in the form of a covered/open chute.

3. The apparatus for beverage/food container end closure laser marking of Claim 2, **characterized in that** the chute is provided with a vibratory motor.

4. The apparatus for beverage/food container end closure laser marking of Claim 1, **characterized in that** the unit for separating a stack of closures into individual closures is configured in the form of an auger separator.

5. The apparatus for beverage/food container end closure laser marking of Claim 1, **characterized in that** the unit for collecting closures in a stack and discharging from the apparatus is configured in the form of a covered/open chute having connected thereto a vacuum suction gripping system for uniform closure arrangement in stacks and producing uniform stacks.

6. The apparatus for beverage/food container end closure laser marking of Claim 1, **characterized in that** the laser marker unit comprises a laser marker control unit having connected thereto a pulsed laser source and an optical means for laser beam forming and pointing to the surface to be marked, a detection module and a module for determining the movement velocity of an object to be marked in communication with the laser marker control unit.

7. The apparatus for beverage/food container end closure laser marking, comprising, arranged in sequence, a unit for loading a stack of closures into the apparatus, a unit for separating a stack of closures into individual closures and feeding them to a means for conveying individual closures for marking and subsequent discharge, a laser marker unit, a rejection unit, a unit for collecting closures in a stack or loose during discharge from the apparatus, **characterized in that** the laser marker unit is configured with a laser marker control unit having connected thereto a pulsed laser source, an optical means for laser beam forming and pointing to the closure surface to be marked, a detection module and a closure movement velocity determining module, the laser marker unit further comprising a closure orientation determining module, configured in the form of a computer vision camera in communication with the orientation determining module control unit which is further connected to an additional detection module, and illumination sources directed to the closure, wherein the laser marker control unit is configured to, in response to a signal generated by the orientation determining module control unit, generate a control signal for the optical means for laser beam forming and pointing to the closure surface to be marked, enabling the laser beam to be pointed in desired direction with respect to the closure surface to be marked.

8. A laser marker unit of an apparatus for beverage/food container end closure laser marking, the laser marker unit comprising a laser marker control unit having connected thereto a pulsed laser source, an optical means for laser beam forming and pointing to the closure surface to be marked, a detection module and a closure movement velocity determining module, **characterized in that** the laser marker unit further comprises a closure orientation determining module, configured in the form of a computer vision camera in communication with the orientation determining module control unit which is further connected to an additional detection module, and illumination sources directed to the closure, wherein the laser marker control unit is configured to, in response to a signal generated by the orientation determining module control unit, generate a control signal for the optical means for laser beam forming and pointing to the closure surface to be marked, enabling the laser beam to be pointed in desired direction with respect to the closure surface to be marked.
